# EUROPÄISCHE PATENTSCHRIFT

(11) **EP 1 953 618 B1**
(45) Veröffentlichungstag und Bekanntmachung des Hinweises auf die Patenterteilung: **25.04.2018**
(21) Anmeldenummer: 08100989.6
(22) Anmeldetag: 28.01.2008
(51) Int. Cl.: G05G 9/047, G05G 1/04

(54) **Bedienvorrichtung für ein Fahrzeug**
Operating device for a vehicle
Dispositif de commande pour un véhicule

(30) Priorität: 02.02.2007 DE 102007005253
(43) Veröffentlichungstag der Anmeldung: 06.08.2008
(73) Patentinhaber: Deere & Company, Moline, IL 61265 (US)
(72) Erfinder: Blind, Alain, 69488, Birkenau (DE); Schörry, Gerd, 68163, Mannheim (DE)
(74) Vertreter: Holst, Sönke

(56) Entgegenhaltungen:
- EP-A- 1 288 763
- WO-A-02/46855
- US-A- 4 822 962
- US-A1- 2007 000 223

## Beschreibung

Die Erfindung betrifft eine Bedienvorrichtung für ein Fahrzeug, insbesondere für ein landwirtschaftliches oder industrielles Nutzfahrzeug. So kann das Fahrzeug in Form einer Baumaschine, eines Teleskopladers, eines Traktors mit Frontlader oder eines Traktors mit einem an dem Traktor adaptierten Arbeitsgerät ausgebildet sein. Die Bedienvorrichtung weist einen von Hand betätigbaren Schalthebel auf. Mit dem Schalthebel ist die Geschwindigkeit des Fahrzeugs einstellbar bzw. veränderbar. Dies kann beispielsweise durch Variation bzw. Einstellung der Motordrehzahl und/oder der Getriebeübersetzung erfolgen, wobei eine Kombination von Verstellung der Motordrehzahl und der Getriebeübersetzung insbesondere dann sinnvoll ist, falls die auf das Fahrzeug wirkenden Lasten sich verändern. Der Schalthebel ist in einer Längsrichtung verstellbar, um die Geschwindigkeit des Fahrzeugs einzustellen bzw. zu verändern. Hierzu kann an dem Schalthebel und/oder an der Konsole mindestens ein Sensor vorgesehen sein, welcher die aktuelle Position des Schalthebels detektiert und ein hiervon abhängiges (z.B. elektrisches) Signal erzeugt, welches einer Steuereinrichtung des Fahrzeugs zugeleitet wird. Des Weiteren weist die Bedienvorrichtung mindestens ein an dem Schalthebel in Längsrichtung mitbewegbares Bedienelement auf, mit welchem ein an das Fahrzeug anbringbares Arbeitsgerät ansteuerbar ist.

Eine derartige Bedienvorrichtung für ein landwirtschaftliches Nutzfahrzeug in Gestalt einer Erntemaschine geht aus der US 2007/0000223 A1 hervor. Die Bedienvorrichtung umfasst einen längs eines Führungsschlitzes verstellbaren Schalthebel, der zur fahrerseitigen Ansteuerung eines von dem landwirtschaftlichen Nutzfahrzeug umfassten hydrostatischen Antriebs dient. Ein oberer Teil des Schalthebels weist ein Eingabefeld mit einer Vielzahl von Schaltern auf, denen verschiedene Arbeitsfunktionen der Erntemaschine, beispielsweise zur Veränderung von Lage und Neigung eines an der Erntemaschine anbringbaren Arbeitsgeräts in Gestalt eines Erntevorsatzes, zugeordnet sind.
Der vorliegenden Erfindung liegt die Aufgabe zugrunde, eine Bedienvorrichtung der eingangs genannten Art bezüglich ihrer Ergonomie weiterzubilden, sodass eine verbesserte Bedienung des Fahrzeugs und des Arbeitsgeräts möglich ist.
Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.
Erfindungsgemäß ist die Bedienvorrichtung der eingangs genannten Art dadurch gekennzeichnet, dass der Schalthebel entlang seines Verstellwegs in Längsrichtung mindestens eine Rastposition aufweist, in welche der Schalthebel zur Ansteuerung des Arbeitsgeräts verbringbar ist, wobei in der Rastposition eine Auslenkung in zwei von der Längsrichtung abweichende Richtungen freigegeben ist. In dieser Rastposition kann der Steuerhebel eine Funktionalität aufweisen, welche vergleichbar zu der eines Joysticks ist. Mit anderen Worten kann zum Einstellen der Fahrzeuggeschwindigkeit der Schalthebel lediglich in einer Längsrichtung verstellt werden. Falls nun eine Ansteuerung des Arbeitsgeräts gewünscht wird, ist hierzu der Schalthebel in die Rastposition zu verbringen. Lediglich in dieser Rastposition kann der Schalthebel auch noch in zwei von der Längsrichtung abweichende andere Richtungen ausgelenkt werden.
Insbesondere ist es nicht erforderlich, dass der Bediener zwischen zwei Bedienvorrichtungen, nämlich dem Joystick für die Ansteuerung des Frontladers und dem Schalthebel zur Einstellung der Fahrzeuggeschwindigkeit, umgreifen muss, um eine mehr oder weniger gleichzeitige Bedienung von Fahrzeug und Arbeitsgerät zu erzielen. Durch Vorsehen des mindestens einen Bedienelements zum Ansteuern des Arbeitsgeräts an dem Schalthebel kann in vorteilhafter Weise einerseits die Fahrzeuggeschwindigkeit eingestellt bzw. verändert und andererseits das Arbeitsgerät angesteuert werden. Somit kann der Bediener mit der einen Hand das Lenkrad steuern und mit der anderen Hand an dem Schalthebel einerseits die Fahrzeuggeschwindigkeit und andererseits das Arbeitsgerät ansteuern, wobei dies gleichzeitig und ohne Umgreifen zu einem anderen Schalthebel möglich ist. Es ist nicht mehr erforderlich, dass der Bediener das Gaspedal mit dem Fuß betätigt, um so die Fahrzeuggeschwindigkeit anzusteuern. Vielmehr kann er einen Fuß reaktionsbereit auf dem Bremspedal platzieren, sodass er erforderlichenfalls schneller reagieren kann, was eine erhöhte Sicherheit mit sich bringt. Hierdurch ist eine einfache und - nach einer kurzen Einlernphase - auch eine intuitive Bedienung des Fahrzeugs und des Arbeitsgeräts möglich. Dieses Bedienkonzept ist darüber hinaus ergonomisch und ein Bediener kann über einen längeren Zeitraum das Fahrzeug mit der erfindungsgemäßen Bedienvorrichtung bedienen, ohne hierbei zu ermüden.

Das an dem Fahrzeug vorgesehene bzw. adaptierbare Arbeitsgerät weist mindestens einen hydraulischen, pneumatischen und/oder elektrischen Aktuator auf. Ein solcher Aktuator ist mit dem mindestens einen Bedienelement ansteuerbar. So weist beispielsweise ein Frontlader zwei in Form von Hydraulikzylindern ausgebildete hydraulische Aktuatoren auf, mit welchen der Ausleger des Frontladers angehoben oder abgesenkt werden kann. Weiterhin ist ein ebenfalls in Form eines Hydraulikzylinders ausgebildeter hydraulischer Aktuator zum Verkippen des Laderwerkzeugs vorgesehen. Ein weiteres Beispiel eines Arbeitsgeräts kann ein Mähwerk sein, welches an einem vorderen oder hinteren Dreipunkt-Geräteanbau des Fahrzeugs adaptierbar ist. Das Anheben oder Absenken des Mähwerks wird in diesem Fall ebenfalls mit zwei in Form von Hydraulikzylindern ausgebildeten Aktuatoren ausgeübt, welche jedoch Bestandteil des jeweiligen Dreipunkt-Geräteanbaus sind (Hubzylinder des Dreipunkt-Geräteanbaus). Insoweit ist es in diesem Zusammenhang auch denkbar, dass ein Aktuator das Arbeitsgerät bewegt, diesem jedoch nicht zwangsläufig zugeordnet sein muss.

Wie schon angedeutet, kann das Arbeitsgerät an einem rückwärtigen Dreipunkt-Geräteanbau, an einem vorderen Dreipunkt-Geräteanbau des Fahrzeugs und/oder an einer am Fahrzeug vorgesehenen Geräteschnittstelle angekoppelt werden. Diese Fallgestaltung trifft insbesondere bei einem in Form eines landwirtschaftlichen Nutzfahrzeugs ausgebildeten Traktor zu, wo nämlich an einen Dreipunkt-Geräteanbau eine ganz erhebliche Vielzahl von Arbeitsgeräten adaptiert werden kann. Diese Arbeitsgeräte können ein Pflug, eine Egge, eine Spritze, eine Rundballenpresse und/oder eine Sämaschine aufweisen. Auch land- oder forstwirtschaftliche Maschinen oder Arbeitsgeräte für den kommunalen Einsatz oder Spezial-Anbaugeräte kommen hierfür in Frage. Diese Arbeitsgeräte können auf ganz unterschiedliche Art und Weise anzusteuern sein. Beispielsweise das Anheben bzw. Absenken des jeweiligen Arbeitsgeräts kann mit Hilfe des an dem Schalthebel vorgesehenen Bedienelements auch während einer langsamen Vorwärts- oder Rückwärtsfahrt kommandiert werden. Gleichzeitig kann es erforderlich sein, bei einer Vorwärtsfahrt des Fahrzeugs die horizontale und/oder vertikale Position sowie die Neigung eines Mähwerks an die Gegebenheiten des Untergrunds anzupassen, was ebenfalls mit mindestens einem an dem Schalthebel vorgesehenen Bedienelement eingestellt werden kann.

Gemäß einer ganz besonders bevorzugten Ausführungsform weist das Arbeitsgerät eine Ladevorrichtung und insbesondere einen Frontlader auf. Mindestens ein Bedienelement ist zum Ansteuern der Ladevorrichtung an dem Schalthebel angeordnet. Bei einem solchen Fahrzeug kann es sich beispielsweise um ein Laderfahrzeug handeln, wo die Ladevorrichtung bzw. der Frontlader permanent an dem Laderfahrzeug adaptiert bzw. angeordnet ist. Es kann sich allerdings auch um ein in Form eines Traktors ausgebildetes Fahrzeug handeln, an welches ein Frontlader bzw. eine Ladevorrichtung adaptiert werden kann. Üblicherweise ist ein solcher Frontlader über einen längeren Zeitraum an dem Traktor angebaut. Gerade bei einer solchen Anwendung kann eine Kombination zwischen Variation der Fahrzeuggeschwindigkeit und Ansteuerung der Ladevorrichtung zweckmäßig sein. So kann beispielsweise eine Ladevorrichtung mit einer Laderschaufel zum Aufladen von Sand auf einem Lastwagen eingesetzt werden. Sobald mit der Schaufel Sand aufgenommen wurde, wird das Fahrzeug in Richtung Lastwagen gefahren. Während dieser Fahrt kann schon der Ausleger bzw. die Schaufel der Ladevorrichtung angehoben werden, um die Schaufel Sand möglichst schnell in eine Entladeposition am Lastwagen zu verbringen. Ein vergleichbares Beispiel stellt ein in Form einer Ballenzange ausgebildetes Laderwerkzeug und der Transport eines Rundballens dar.

Der Schalthebel ist in einer Längsrichtung verstellbar angeordnet, wobei grundsätzlich alle Verstellbewegungen denkbar sind. Besonders bevorzugt ist der Schalthebel derart geführt bzw. gelagert, dass die Verstellung des Schalthebels in einer Längsrichtung gemäß einer um eine Drehachse gelagerte Drehbewegung erfolgt. Alternativ hierzu kann die Verstellung des Schalthebels durch ein Verschwenken oder ein Verschieben erfolgen. Falls der Schalthebel verschiebbar verstellt werden kann, kann dies im Wesentlichen im Sinn einer Parallelverschiebung realisiert werden. Demgemäß weist die Längsachse des Schalthebels in unterschiedlichen Einstellpositionen stets im Wesentlichen eine gleiche Orientierung auf. Auch eine Kombination der bevorzugten Verstellarten ist denkbar.

Gemäß einer besonders bevorzugten Ausführungsform ist das Bedienelement in Form eines Joysticks ausgeführt. Der Joystick ist zusammen mit dem Schalthebel in Längsrichtung mitbewegbar angeordnet. Dementsprechend kann das Bedienelement eine Kreuz- oder eine Kugelgelenklagerung aufweisen, mit welcher das Bedienelement ausgelenkt werden kann. Das Bedienelement ist hierbei unmittelbar an dem Schalthebel vorgesehen und wird daher bei einer Verstellung des Schalthebels in einer Längsrichtung mit dem Schalthebel mitbewegt.

Der Joystick kann in zwei unabhängig voneinander orientierte Richtungen auslenkbar sein. Vorzugsweise sind die zwei unabhängig voneinander orientierten Richtungen senkrecht zueinander angeordnet, wobei allerdings auch eine Auslenkung des Joysticks in eine beliebige Richtung möglich ist, wenn diese von den zwei unabhängigen Richtungen sich ergeben kann.

Die eine Auslenkrichtung kann im Wesentlichen parallel zur Längsrichtung der Verstellung des Schalthebels ausgerichtet sein. Die andere Auslenkrichtung kann im Wesentlichen senkrecht hierzu ausgerichtet sein. Somit ist die Auslenkrichtung des Joysticks mit der Verstellmöglichkeit des Schalthebels entlang seiner Längsrichtung gekoppelt. Dies fördert eine intuitive Bedienung der Bedienvorrichtung.

Der Joystick kann an einem der Konsole des Schalthebels abgewandten Bereich des Schalthebels angeordnet sein. Mit anderen Worten kann der Joystick an einem oberen Bereich des Schalthebels angeordnet sein und beispielsweise von einem Daumen des Bedieners betätigt werden, während die restlichen Finger der Bedienerhand den Schalthebel umgreifen. Somit kann der Schalthebel zur Einstellung der Fahrzeuggeschwindigkeit von der Bedienerhand verschoben werden und gleichzeitig mit dem Daumen zum Ansteuern eines Frontladers der Joystick bedient werden.

Weiterhin kann der Schalthebel eine Längsachse aufweisen. Der Joystick kann in Richtung der Längsachse des Schalthebels bewegbar sein. Hiermit kann eine Ansteuerfunktionalität und/oder eine Sicherungsfunktionalität bei der Ansteuerung des Arbeitsgeräts verbunden sein. So kann beispielsweise vorgesehen sein, dass das Arbeitsgerät dann und nur dann ansteuerbar ist, falls der Joystick entlang der Richtung der Längsachse des Schalthebels nach unten gedrückt wird und entsprechend der gewünschten Ansteuerfunktionalität durch Auslenken des Joysticks entsprechend angesteuert wird. Hierdurch kann ein versehentliches Betätigen des Joysticks zumindest weitgehend vermieden werden.

Aus praktischen Erwägungen kann vorgesehen sein, dass der Schalthebel ein Bedienelement zum Einstellen der Fahrtgeschwindigkeit des Fahrzeugs und/oder zum Einstellen eines Offsets der Fahrtgeschwindigkeit des Fahrzeugs aufweist. Dieses Bedienelement könnte in Form eines Drehrads oder eines Schiebereglers und/oder eines Potentiometers ausgebildet sein. Falls beispielsweise der Schalthebel in die Rastposition verbracht wurde und somit durch die dort vorgesehene Joystick-Funktionalität lediglich das Arbeitsgerät angesteuert werden kann, kann mit Hilfe des am Schalthebel angeordneten Bedienelements zum Einstellen der Fahrtgeschwindigkeit und/oder dessen Offsets dennoch die Fahrtgeschwindigkeit des Fahrzeugs verändert werden, und zwar ohne den Schalthebel entlang der Längsrichtung zu verstellen. Somit können auch in dieser Ausführungsform die Fahrzeuggeschwindigkeit und das Arbeitsgerät mit einer Bedienerhand gleichzeitig und ohne Umgreifen zu einem anderen Bedienelement angesteuert werden.

Aus Sicherheitsgründen könnte vorgesehen sein, dass das Bedienelement zum Einstellen der Fahrtgeschwindigkeit und/oder zum Einstellen eines Offsets der Fahrtgeschwindigkeit nur dann aktiviert ist, wenn der Schalthebel in einem Betriebszustand ist, in welchem das Arbeitsgerät bedient wird. Falls der Schalthebel in einem anderen Betriebszustand ist, könnte das Bedienelement zum Einstellen der Fahrtgeschwindigkeit und/oder dessen Offset deaktiviert sein. In einem solchen Betriebszustand könnte beispielsweise dieses Bedienelement mit einer anderen Funktion belegt werden.

Gemäß einer besonders bevorzugten Ausführungsform weist der Schalthebel ein Bedienelement zum Aktivieren und Deaktivieren der Ansteuerung des Arbeitsgeräts auf. Ein solches Bedienelement könnte ebenfalls zu Sicherheitszwecken vorgesehen sein, so dass nicht versehentlich das Arbeitsgerät angesteuert wird, obwohl lediglich eine Betätigung des Schalthebels zum Einstellen der Fahrzeuggeschwindigkeit beabsichtigt ist. Im Konkreten könnte ein solches Bedienelement auch derart ausgebildet sein, dass eine Betätigung des Bedienelements erforderlich ist, um den Schalthebel in die Rastposition zu verbringen bzw. aus der Rastposition heraus zu bewegen.

Weiterhin könnte der Schalthebel mindestens einen Tast- und/oder Wippschalter aufweisen, mit welchem eine hydraulische Funktion des Arbeitsgeräts ansteuerbar ist. Wie schon erwähnt, könnten mit einem solchen Wippschalter die Hubzylinder eines Dreipunkt-Geräteanbaus des Fahrzeugs oder eines Auslegers eines Frontladers angesteuert werden. In diesem Zusammenhang könnte auch vorgesehen sein, dass mindestens einem an dem Schalthebel vorgesehenen Bedienelement eine Arbeitsfunktion veränderbar zugewiesen wird. Eine solche Zuweisung könnte von einem Bediener vorgebbar sein, falls eine entsprechende Eingabe- und Auswahlmöglichkeit vorgesehen ist. Eine solche Zuweisung könnte alternativ oder zusätzlich automatisch nach einer Ankopplung eines bestimmten Arbeitsgeräts erfolgen, falls das Arbeitsgerät über eine entsprechende elektronische Schnittstelle mit dem Fahrzeug kommunizieren kann. Ein Beispiel hierfür ist der ISO-Bus gemäß der ISO-Norm 11783.

In einer konkreten Ausführungsform weist der Schalthebel zur Ansteuerung einer Ladevorrichtung drei Wippschalter, einen Tastschalter und ein Drehrad mit Potentiometerfunktion auf. Mit den drei Wippschaltern - insbesondere mit Umschalt- bzw. Diverterfunktionalität - werden Hydraulikfunktionen des Frontladers angesteuert, beispielsweise das Anheben bzw. Absenken des Auslegers sowie das nach oben beziehungsweise nach unten Verkippen des Laderwerkzeugs. Es könnte mit einem solchen Schalter auch eine Zusatzfunktion des Laderwerkzeugs betätigt werden, beispielsweise das Öffnen oder Schließen einer Laderzange. Der Tastschalter dient zum Verriegeln bzw. zum Entriegeln des Schalthebels in der Rastposition. Das Drehrad dient zum Einstellen der Fahrtgeschwindigkeit. Eine so ausgebildete Bedienvorrichtung ist lediglich ein Ausführungsbeispiel für eine an diesen konkreten Anwendungsfall speziell ausgebildete erfindungsgemäße Bedienvorrichtung, welche zur Bedienung des Fahrzeugs mit der Ladevorrichtung konzipiert ist. Dementsprechend können für andere Anwendungsfälle ähnliche oder andere Bedienvorrichtungen ausgebildet werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: in einer perspektivischen Ansicht ein erstes Ausführungsbeispiel einer erfindungsgemäßen Bedienvorrichtung,
- Fig. 2: in einer perspektivischen Ansicht ein zweites Ausführungsbeispiel einer erfindungsgemäßen Bedienvorrichtung,
- Fig. 3a: ein drittes Ausführungsbeispiel einer erfindungsgemäßen Bedienvorrichtung,
- Fig. 3b: das Ausführungsbeispiel aus Fig. 3a, bei welcher der Schalthebel in einer anderen Stellung angeordnet ist und
- Fig. 4: ein in Form eines Traktors ausgebildetes Fahrzeug, an welchem ein in Form einer Ladevorrichtung ausgebildetes Arbeitsgerät angebaut ist.

Gleiche oder ähnliche Bauteile sind in den Fig. mit denselben Bezugszeichen gekennzeichnet.

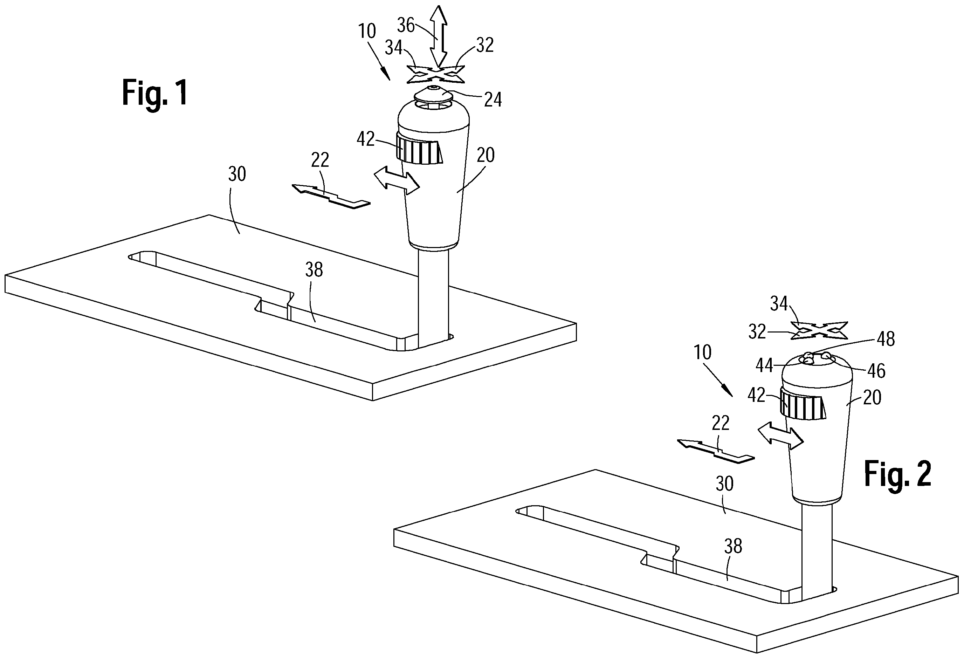

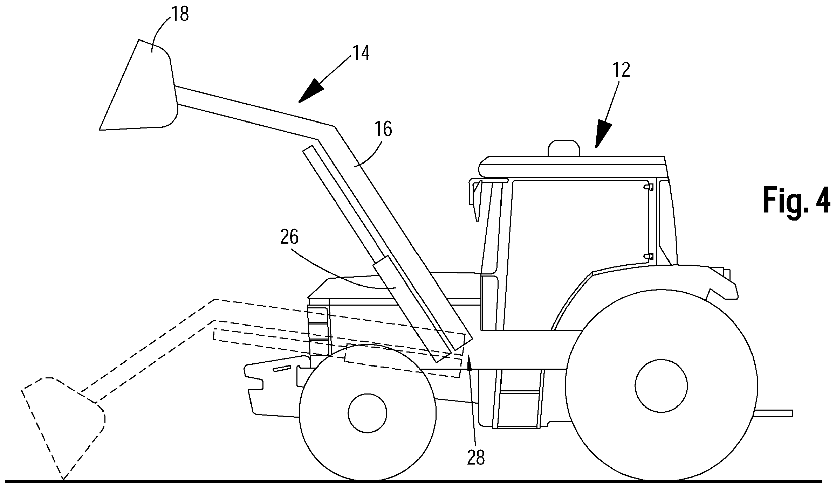

Fig. 1 zeigt ein erstes Ausführungsbeispiel einer erfindungsgemäßen Bedienvorrichtung 10 für ein Fahrzeug 12. Bei dem in Fig. 4 gezeigten Fahrzeug 12 handelt es sich um einen Traktor 12 mit einem in Form einer Ladevorrichtung 14 ausgebildeten Arbeitsgerät. Die Ladevorrichtung 14 umfasst einen Ausleger 16, welcher mit seinem einen Ende an dem Traktor 12 drehbar angelenkt ist und welcher an seinem anderen Ende ein in Form einer Schaufel ausgebildetes Laderwerkzeug 18 aufweist. Die Ladevorrichtung 14 umfasst zwei hydraulische Aktuatoren 26 (an der linken und an der rechten Seite des Traktors 12, in Fig. 4 ist nur ein Aktuator gezeigt), welche in Form von Hydraulikzylindern ausgebildet sind und mit welchen der Ausleger 16 gegenüber dem Traktor 12 verdreht werden kann. Die Ladevorrichtung 14 ist an einer am Traktor 12 vorgesehenen Geräteschnittstelle 28 angebaut, welche für sich gesehen aus dem Stand der Technik bekannt ist.

Die Bedienvorrichtung 10 weist einen von Hand betätigbaren Schalthebel 20 auf. Mit dem Schalthebel 20 kann die Geschwindigkeit des Fahrzeugs eingestellt werden. Der Schalthebel 20 ist hierzu in einer Längsrichtung verstellbar, welche mit dem Pfeil 22 angedeutet ist. Bei einer solchen Verstellbewegung ist der Schalthebel 20 in einem Führungsschlitz 38 bzw. einer Schaltgasse geführt.

In erfindungsgemäßer Weise weist der Schalthebel gemäß Fig. 1 mindestens ein Bedienelement 24 auf, mit welchem die Ladevorrichtung 14 ansteuerbar ist. Das Bedienelement 24 ist an einem oberen Teil des Schalthebels 20 angeordnet und bewegt sich bei einer Bewegung des Schalthebels 20 entlang der Längsrichtung gemäß Pfeil 22 mit dem Schalthebel 20 mit. Somit ist der Joystick an einem der Konsole 30 des Schalthebels 20 abgewandten Bereich des Schalthebels 20 angeordnet.

Der Schalthebel gemäß den Fig. 1 und 2 ist derart in einer Konsole 30 geführt bzw. gelagert, dass die Verstellung des Schalthebels 20 in einer Längsrichtung (Pfeil 22) gemäß einem Verschieben im Sinn einer Parallelverschiebung des Schalthebels 20 erfolgt.

Das Bedienelement 24 gemäß Fig. 1 ist in Form eines Joysticks ausgeführt. Der Joystick 24 wird beim Verstellen des Schalthebels 20 in Längsrichtung mit diesem mitbewegt. Der Joystick 24 ist in zwei unabhängig voneinander orientierte Richtungen auslenkbar. Die Richtungen sind mit den Pfeilen 32, 34 gekennzeichnet. Die eine Auslenkrichtung 34 ist im Wesentlichen parallel zur mit dem Pfeil 22 gekennzeichneten Längsrichtung ausgerichtet. Die andere Auslenkrichtung 32 ist im Wesentlichen senkrecht hierzu ausgerichtet.

Der Schalthebel 20 weist eine Längsachse 36 auf. Der Joystick 24 ist in Richtung der Längsachse 36 des Schalthebels 20 bewegbar. Hiermit ist eine Diverterfunktion bei der Ansteuerfunktionalität der Ladevorrichtung 14 verbunden. Ausgehend von dem in Fig. 1 gezeigten Betriebszustand des Joysticks 24 kann der Joystick 24 entlang der Langsachse 36 des Schalthebels 20 nach unten, in eine - in Fig. 1 nicht gezeigte - Position verbracht werden, in welcher er dennoch in die Richtungen 32, 34 auslenkbar ist. In einem solchen Betriebszustand ist der Joystick 24 zur Ansteuerung der Ladevorrichtung aktiviert. Somit dient der entlang der Richtung 36 beweglich angeordnete Joystick 24 bzw. dessen Funktionalität als Bedienelement zum Aktivieren und Deaktivieren der Ansteuerung der Ladevorrichtung. Wenn der Joystick 24 entlang der Richtung 34 bewegt wird, wird hierdurch der Ausleger 16 der Ladevorrichtung 14 angehoben bzw. abgesenkt. Wenn der Joystick 24 entlang der Richtung 32 bewegt wird, wird die Schaufel 18 der Ladevorrichtung 14 nach oben beziehungsweise nach unten verkippt. Eine Betätigung des Joysticks 24 und eine Verstellung des Schalthebels 20 in Längsrichtung (Pfeil 22) ist (auch gleichzeitig) möglich.

Das Ausführungsbeispiel gemäß Fig. 2 zeigt einen Schalthebel 20, welcher ebenfalls zum Verstellen der Fahrzeuggeschwindigkeit in einer Längsrichtung (mit Pfeil 22 gekennzeichnet) in einem Führungsschlitz 38 in einer Konsole 30 verschiebbar gelagert bzw. geführt ist. Der Führungsschlitz 38 aus Fig. 2 weist an dem einen Ende 40 eine Rastposition auf, in welche der Schalthebel 20 verbringbar ist. Schalthebel 20 ist in Fig. 2 in dieser Rastposition gezeigt. In dieser Rastposition kann der Schalthebel 20 in zwei unabhängig voneinander orientierte Richtungen ausgelenkt werden, wobei die Auslenkrichtungen mit den Pfeilen 32, 34 angedeutet sind. Insoweit weist der Schalthebel 20, wenn er sich in der Rastposition befindet, eine Funktionalität auf, welche mit der Funktionalität eines Joysticks vergleichbar ist.

Die in den Fig. 1 und 2 gezeigten Schalthebel 20 weisen jeweils ein Bedienelement 42 zum Einstellen der Fahrtgeschwindigkeit des Traktors 12 auf. Das Bedienelement 42 kann auch zum Einstellen eines Offsets der Fahrtgeschwindigkeit des Traktors 12 genutzt werden. Das Bedienelement 42 ist in Form eines Drehrads ausgebildet und hat eine Funktionalität eines Potentiometers.

Der Schalthebel 20 gemäß Fig. 2 weist drei Tastschalter 44, 46 und 48 auf, mit welchen eine hydraulische Funktion eines an dem hinteren Dreipunkt-Geräteanbau (nicht gezeigt) des Traktors 12 adaptierbaren Arbeitsgeräts (nicht gezeigt) ansteuerbar ist. Obwohl in den Fig. 1 und 2 nicht explizit gezeigt, könnte das Griffteil des Schalthebels 20 selbst eine Form aufweisen, die der Form eines Griffteils eines herkömmlichen Joysticks entspricht.

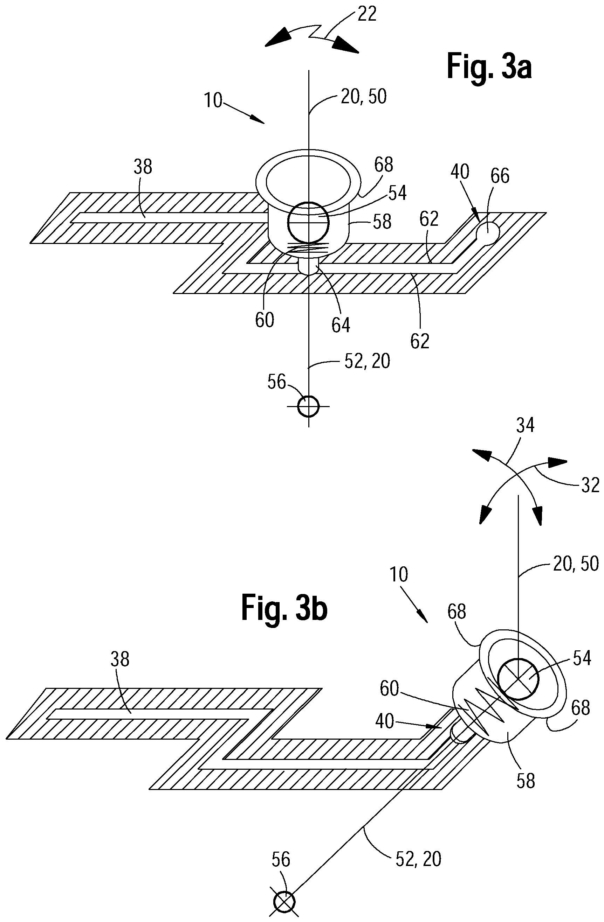

Die Fig. 3a und 3b zeigen ein weiteres Ausführungsbeispiel einer erfindungsgemäßen Bedienvorrichtung 10, welche eine vergleichbare Wirkungsweise wie der Bedienvorrichtung 10 gemäß Fig. 2 aufweist. Hierbei weist der Schalthebel 20 einen oberen Bereich 50 sowie einen unteren Bereich 52 auf. Der obere Bereich 50 wird von der Hand des Bedieners umgriffen und somit betätigt. Der untere Bereich 52 ist mit seinem oberen Ende mit dem Kugelgelenk 54 verbunden. Das andere Ende des unteren Bereichs 52 ist mit dem Kugelgelenk 56 an dem Fahrzeug derart befestigt, dass der untere Bereich 52 sich in zwei unabhängig voneinander orientierte Richtungen um einen Dreh- bzw. Schwenkpunkt bewegen kann. Der untere Bereich 52 des Schalthebels 20 ist in der Schaltgasse bzw. dem Führungsschlitz 38 geführt, so dass der untere Bereich 52 (zusammen mit dem oberen Bereich 50) des Schalthebels 20 in Längsrichtung 22 bewegt werden kann.

Der Schalthebel 20 weist ein Arretierelement 58 auf, welches in dem in Fig. 3a gezeigten Zustand das Kugelgelenk 54 (im Wesentlichen zylinderförmig) umschließt. Das Kugelgelenk 54 und das Arretierelement 58 wirken in dieser Stellung derart zusammen, dass der obere Bereich 50 und der untere Bereich 52 des Schalthebels 20 sich nicht relativ zueinander bewegen können. Mit anderen Worten arretiert das Arretierelement 58 die beiden Bereiche 50, 52 des Schalthebels 20 miteinander. Zwischen dem Kugelgelenk 54 und dem inneren unteren Bereich des Arretierelements 58 ist eine Feder 60 vorgesehen, mit welcher das Arretierelement 58 in Richtung der Längsachse des unteren Bereichs 52 und weg von dem Kugelgelenk 54 gedrängt wird. Solange der Schalthebel 20 bzw. der untere Bereich 52 in dem Führungsschlitz 38 geführt ist, welcher lediglich die parallel zueinander angeordnete Seiten 62 aufweist, befindet sich das Arretierelement 58 in einer Stellung relativ zum Kugelgelenk 54, in welcher die beiden Bereiche 50, 52 des Schalthebels 20 starr miteinander verbunden sind. In Fig. 3b ist der Schalthebel 20 in einer Stellung gezeigt, in welcher sich der untere Bereich 52 in der Rastposition 40 des Führungsschlitzes 38 befindet. Der äußere untere Bereich 64 des Arretierelements 58 ist im Wesentlichen zylinderförmig ausgebildet und weist einen Außendurchmesser auf, welcher größer ist als die Breite des Führungsschlitzes 38 bzw. der Abstand der gegenüberliegenden Seiten 62. Der Führungsschlitz 38 weist an der Rastposition 40 eine kreisförmige Verbreiterung bzw. Ausnehmung 66 auf, in welche der untere äußere Bereich 64 des Arretierelements 58 zumindest teilweise eingreifen bzw. einrücken kann, so dass sich die Feder 60 teilweise entspannen kann. Hierdurch ist zumindest der untere Bereich 52 des Schalthebels 20 in der Rastposition 40 arretiert, so dass der untere Bereich 52 nicht ohne ein zusätzliches Entriegeln in den Teil des Führungsschlitzes 38 bewegt werden kann, welcher die beiden parallel zueinander angeordneten Seiten 62 aufweist. In der Rastposition 40 kann das Arretierelement 58 von dem Kugelgelenk 54 wegbewegt werden und die beiden Bereiche 50, 52 des Schalthebels 20 können sich über das Kugelgelenk 54 relativ zueinander bewegen. In der Rastposition 40 kann also der obere Bereich 50 des Schalthebels 20 wie ein Joystick bedient werden, er kann nämlich zumindest entlang den Richtungen 32 bzw. 34 ausgelenkt werden.

Der Schalthebel kann aus der Rastposition 40 wieder heraus bewegt werden, indem das Arretierelement 58 nach oben bewegt wird. Hierzu ist das Griffteil 68 vorgesehen, welches beispielsweise mit zwei Fingern betätigt werden kann. Wenn dies der Fall ist, umgreift der hohlzylindrische innere Bereich des Arretierelements 58 wieder das Kugelgelenk 54, wodurch die beiden Bereiche 50, 52 des Schalthebels 20 wieder starr zueinander angeordnet sind.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Bedienvorrichtung für ein Fahrzeug, insbesondere für ein landwirtschaftliches oder industrielles Nutzfahrzeug, mit einem von Hand betätigbaren Schalthebel (20), mit welchem die Geschwindigkeit des Fahrzeugs (12) einstellbar ist, wobei der Schalthebel (20) zur Einstellung der Geschwindigkeit des Fahrzeugs (12) in Längsrichtung (22) verstellbar ist, und mit mindestens einem an dem Schalthebel (20) in Längsrichtung (22) mitbewegbar angeordneten Bedienelement (24, 44, 46, 48), mit welchem ein an das Fahrzeug (12) anbringbares Arbeitsgerät (14) ansteuerbar ist, **dadurch gekennzeichnet, dass** der Schalthebel (20) entlang seines Verstellwegs in Längsrichtung (22) mindestens eine Rastposition aufweist, in welche der Schalthebel (20) zur Ansteuerung des Arbeitsgeräts (14) verbringbar ist, wobei in der Rastposition eine Auslenkung des Schalthebels (20) in zwei von der Längsrichtung (22) abweichende Richtungen (32, 34) freigegeben ist.

2. Bedienvorrichtung nach Anspruch 1, **dadurch gekennzeichnet, dass** das Arbeitsgerät (14) mindestens einen hydraulischen, pneumatischen und/oder elektrischen Aktuator (26) aufweist, welcher mit dem mindestens einen Bedienelement (24, 44, 46, 48) ansteuerbar ist.

3. Bedienvorrichtung nach Anspruch 1 oder 2, **dadurch gekennzeichnet, dass** das Arbeitsgerät (14) an einem rückwärtigen Dreipunkt-Geräteanbau des Fahrzeugs (12), an einem vorderen Dreipunkt-Geräteanbau des Fahrzeugs (12) und/oder an einer am Fahrzeug (12) vorgesehenen Geräteschnittstelle (28) anbringbar ist.

4. Bedienvorrichtung nach einem der Ansprüche 1 bis 3, **dadurch gekennzeichnet, dass** das Arbeitsgerät (14) eine Ladevorrichtung aufweist, wobei an dem Schalthebel (20) mindestens ein Bedienelement (24) zur Ansteuerung der Ladevorrichtung (14) angeordnet ist.

5. Bedienvorrichtung nach einem der Ansprüche 1 bis 4, **dadurch gekennzeichnet, dass** der Schalthebel (20) derart geführt ist, dass die Verstellung des Schalthebels (20) in Längsrichtung (22) gemäß einer um eine Drehachse gelagerten Drehbewegung, einem Verschwenken oder einem Verschieben erfolgt.

6. Bedienvorrichtung nach einem der Ansprüche 1 bis 5, **dadurch gekennzeichnet, dass** das Bedienelement (24) in Gestalt eines Joysticks ausgebildet ist, wobei der Joystick (24) an dem Schalthebel (20) in Längsrichtung (22) mitbewegbar angeordnet ist.

7. Bedienvorrichtung nach Anspruch 6, **dadurch gekennzeichnet, dass** der Joystick (24) in zwei unabhängig voneinander orientierte Richtungen (32, 34) auslenkbar ist.

8. Bedienvorrichtung nach Anspruch 7, **dadurch gekennzeichnet, dass** die eine Auslenkungsrichtung (34) im Wesentlichen parallel zur Längsrichtung (22) orientiert ist, wobei die andere Auslenkungsrichtung (32) im Wesentlichen senkrecht zur Längsrichtung (22) orientiert ist.

9. Bedienvorrichtung nach einem der Ansprüche 6 bis 8, **dadurch gekennzeichnet, dass** der Joystick (24) an einem einer Schalthebelkonsole (30) abgewandten Bereich des Schalthebels (20) angeordnet ist.

10. Bedienvorrichtung nach einem der Ansprüche 6 bis 9, **dadurch gekennzeichnet, dass** der Schalthebel (20) eine Längsachse (36) aufweist, wobei der Joystick (24) zur Ansteuerung des Arbeitsgeräts (14) in Richtung der Längsachse (36) des Schalthebels (20) bewegbar ist.

11. Bedienvorrichtung nach einem der Ansprüche 1 bis 10, **dadurch gekennzeichnet, dass** der Schalthebel (20) ein Bedienelement (42) zur Einstellung der Geschwindigkeit des Fahrzeugs (12) und/oder zur Einstellung eines Offsets der Geschwindigkeit des Fahrzeugs (12) aufweist, wobei das Bedienelement vorzugsweise in Form eines Drehrads (42) oder eines Schiebereglers ausgebildet ist.

12. Bedienvorrichtung nach Anspruch 11, **dadurch gekennzeichnet, dass** das Bedienelement (42) zur Einstellung der Geschwindigkeit des Fahrzeugs (12) und/oder zur Einstellung eines Offsets der Geschwindigkeit des Fahrzeugs (12) ausschließlich dann aktiviert ist, wenn sich der Schalthebel (20) in einem Betriebszustand befindet, in welchem das Arbeitsgerät (14) bedient wird.

13. Bedienvorrichtung nach einem der Ansprüche 1 bis 12, **dadurch gekennzeichnet, dass** der Schalthebel (20) ein Bedienelement (24) zum Aktivieren und Deaktivieren der Ansteuerung des Arbeitsgeräts (14) aufweist.

14. Bedienvorrichtung nach einem der Ansprüche 1 bis 13, **dadurch gekennzeichnet, dass** der Schalthebel (20) mindestens einen Tastschalter (44, 46, 48) und/oder Wippschalter aufweist, mit welchem eine hydraulische Funktion des Arbeitsgeräts (14) ansteuerbar ist.

15. Bedienvorrichtung nach einem der Ansprüche 1 bis 14, **dadurch gekennzeichnet, dass** mindestens einem an dem Schalthebel (20) vorgesehenen Bedienelement (24, 42, 44, 46, 48) eine Arbeitsfunktion veränderbar zuweisbar ist.

## Claims

1. Operating device for a vehicle, in particular for an agricultural or industrial utility vehicle, having a manually actuatable control lever (20), using which the speed of the vehicle (12) is adjustable, the control lever (20) being adjustable in a longitudinal direction (22) in order to adjust the speed of the vehicle (12), and having at least one operating element (24, 44, 46, 48) which is arranged on the control lever (20) so as to be movable together with said control lever (20) in the longitudinal direction (22) and with which an implement (14) which may be attached to the vehicle (12) may be driven, **characterized in that** the control lever (20) has, along its adjustment path in the longitudinal direction (22), at least one catch position, into which the control lever (20) may be moved in order to drive the implement (14), a deflection of the control lever (20) being permitted in the catch position in two directions (32, 34) differing from the longitudinal direction (22).

2. Operating device according to Claim 1, **characterized in that** the implement (14) comprises at least one hydraulic, pneumatic and/or electrical actuator (26), which is actuatable using the at least one operating element (24, 44, 46, 48).

3. Operating device according to Claim 1 or 2, **characterized in that** the implement (14) may be attached to a rear three-point implement linkage of the vehicle (12), to a front three-point implement linkage of the vehicle (12) and/or to an implement interface (28) provided on the vehicle (12).

4. Operating device according to one of Claims 1 to 3, **characterized in that** the implement (14) comprises a loading device, at least one operating element (24) being arranged on the control lever (20) for driving the loading device (14).

5. Operating device according to one of Claims 1 to 4, **characterized in that** the control lever (20) is guided in such a way that the adjustment of the control lever (20) in the longitudinal direction (22) proceeds in accordance with rotary motion about an axis of rotation, swivelling or shifting.

6. Operating device according to one of Claims 1 to 5, **characterized in that** the operating element (24) takes the form of a joystick, the joystick (24) being arranged so as to be movable together with the control lever (20) in the longitudinal direction (22).

7. Operating device according to Claim 6, **characterized in that** the joystick (24) is deflectable in two mutually independently oriented directions (32, 34) .

8. Operating device according to Claim 7, **characterized in that** the one deflection direction (34) is oriented substantially parallel to the longitudinal direction (22), the other deflection direction (32) being oriented substantially perpendicularly to the longitudinal direction (22).

9. Operating device according to one of Claims 6 to 8, **characterized in that** the joystick (24) is arranged on an area of the control lever (20) remote from a control lever console (30).

10. Operating device according to one of Claims 6 to 9, **characterized in that** the control lever (20) has a longitudinal axis (36), the joystick (24) being movable in the direction of the longitudinal axis (36) of the control lever (20) in order to drive the implement (14).

11. Operating device according to one of Claims 1 to 10, **characterized in that** the control lever (20) comprises an operating element (42) for adjusting the speed of the vehicle (12) and/or for adjusting an offset of the speed of the vehicle (12), the operating element preferably taking the form of a rotary wheel (42) or of a slider.

12. Operating device according to Claim 11, **characterized in that** the operating element (42), for adjusting the speed of the vehicle (12) and/or for adjusting a speed offset of the vehicle (12), is activated exclusively when the control lever (20) is in an operating state in which the implement (14) is operated.

13. Operating device according to one of Claims 1 to 12, **characterized in that** the control lever (20) comprises an operating element (24) for activating and deactivating the drive of the implement (14).

14. Operating device according to one of Claims 1 to 13, **characterized in that** the control lever (20) comprises at least one momentary-contact switch (44, 46, 48) and/or rocker switch, with which a hydraulic function of the implement (14) is actuatable.

15. Operating device according to one of Claims 1 to 14, **characterized in that** a working function may be assigned in modifiable manner to at least one operating element (24, 42, 44, 46, 48) provided on the control lever (20).

## Revendications

1. Dispositif de commande pour un véhicule, notamment pour un véhicule utilitaire agricole ou industriel, comprenant un levier de changement de rapport (20) actionnable manuellement, lequel permet de régler la vitesse du véhicule (12), le levier de changement de rapport (20) étant positionnable dans la direction longitudinale (22) en vue de régler la vitesse du véhicule (12), et comprenant au moins un élément de commande (24, 44, 46, 48) disposé sur le levier de changement de rapport (20) pouvant accompagner son mouvement dans la direction longitudinale (22), lequel permet de piloter un accessoire de travail (14) qui peut être monté sur le véhicule (12), **caractérisé en ce que** le levier de changement de rapport (20) possède, le long de sa course de positionnement dans la direction longitudinale (22), au moins une position d'encliquetage dans laquelle peut être amené le levier de changement de rapport (20) pour piloter l'accessoire de travail (14), une déviation du levier de changement de rapport (20) dans deux directions (32, 34) différentes de la direction longitudinale (22) étant libérée dans la position d'encliquetage.

2. Dispositif de commande selon la revendication 1, **caractérisé en ce que** l'accessoire de travail (14) possède au moins un actionneur (26) hydraulique, pneumatique et/ou électrique qui peut être commandé avec l'au moins un élément de commande (24, 44, 46, 48).

3. Dispositif de commande selon la revendication 1 ou 2, **caractérisé en ce que** l'accessoire de travail (14) peut être monté sur un porte-accessoire à trois points à l'arrière du véhicule (12), sur un porte-accessoire à trois points à l'avant du véhicule (12) et/ou sur une interface d'accessoire (28) présente sur le véhicule (12).

4. Dispositif de commande selon l'une des revendications 1 à 3, **caractérisé en ce que** l'accessoire de travail (14) possède un dispositif de chargement, au moins un élément de commande (24) servant à piloter le dispositif de chargement (14) étant disposé sur le levier de changement de rapport (20) .

5. Dispositif de commande selon l'une des revendications 1 à 4, **caractérisé en ce que** le levier de changement de rapport (20) est guidé de telle sorte que le positionnement du levier de changement de rapport (20) dans la direction longitudinale (22) s'effectue conformément à un mouvement de rotation supporté autour d'un axe de rotation, un basculement ou une translation.

6. Dispositif de commande selon l'une des revendications 1 à 5, **caractérisé en ce que** l'élément de commande (24) est réalisé sous la forme d'une manette de commande, la manette de commande (24) étant disposée sur le levier de changement de rapport (20) de manière à pouvoir accompagner son mouvement dans la direction longitudinale (22).

7. Dispositif de commande selon la revendication 6, **caractérisé en ce que** la manette de commande (24) peut être déviée dans deux directions (32, 34) orientées indépendamment l'une de l'autre.

8. Dispositif de commande selon la revendication 7, **caractérisé en ce que** l'une des directions de déviation (34) est orientée sensiblement parallèlement à la direction longitudinale (22), l'autre direction de déviation (32) étant orientée sensiblement perpendiculairement à la direction longitudinale (22).

9. Dispositif de commande selon l'une des revendications 6 à 8, **caractérisé en ce que** la manette de commande (24) est disposée au niveau d'une zone du levier de changement de rapport (20) à l'opposé d'une console de levier de changement de rapport (30).

10. Dispositif de commande selon l'une des revendications 6 à 9, **caractérisé en ce que** le levier de changement de rapport (20) possède un axe longitudinal (36), la manette de commande (24) pouvant être déplacée dans la direction de l'axe longitudinal (36) du levier de changement de rapport (20) pour piloter l'accessoire de travail (14).

11. Dispositif de commande selon l'une des revendications 1 à 10, **caractérisé en ce que** le levier de changement de rapport (20) possède un élément de commande (42) destiné à régler la vitesse du véhicule (12) et/ou à régler un décalage de la vitesse du véhicule (12), l'élément de commande étant de préférence réalisé sous la forme d'une molette (42) ou d'un curseur de réglage.

12. Dispositif de commande selon la revendication 11, **caractérisé en ce que** l'élément de commande (42) destiné à régler la vitesse du véhicule (12) et/ou à régler un décalage de la vitesse du véhicule (12) n'est activé exclusivement que lorsque le levier de changement de rapport (20) se trouve dans un état opérationnel dans lequel l'accessoire de travail (14) est commandé.

13. Dispositif de commande selon l'une des revendications 1 à 12, **caractérisé en ce que** le levier de changement de rapport (20) possède un élément de commande (24) destiné à activer et à désactiver le pilotage de l'accessoire de travail (14).

14. Dispositif de commande selon l'une des revendications 1 à 13, **caractérisé en ce que** le levier de changement de rapport (20) possède au moins un commutateur à poussoir (44, 46, 48) et/ou un commutateur à bascule avec lequel peut être pilotée une fonction hydraulique de l'accessoire de travail (14).

15. Dispositif de commande selon l'une des revendications 1 à 14, **caractérisé en ce qu'**une fonction de travail peut être affectée de manière variable à au moins un élément de commande (24, 42, 44, 46, 48) présent sur le levier de changement de rapport (20) .
